# DEMANDE DE BREVET EUROPEEN

(11) **EP 3 072 676 A1**
(43) Date de publication de la demande: **28.09.2016**
(21) Numéro de dépôt: 15305436.6
(22) Date de dépôt: 25.03.2015
(51) Int. Cl.: B30B 15/28, B21D 24/02, F16F 9/02

(54) **DISPOSITIF DE RESSORT À GAZ SÉCURISÉ**

(71) Demandeur: Société des Usines QUIRI & Cie, S.A., 67300 Schiltigheim (FR)
(72) Inventeur: Feisthauer, Francis, 67000 STRASBOURG (FR)
(74) Mandataire: Nuss, Laurent

(57) **Abrégé**

La présente invention a pour objet un dispositif de ressort à gaz sécurisé comprenant un corps de cylindre (1) renfermant une chambre de compression (2), une bague de guidage (3), une tige (4) guidée axialement dans cette dernière et se terminant par une collerette (5) et un joint d'étanchéité dynamique (6) interposé entre la bague de guidage (3) et la tige (4).

Il comprend en outre un élément de sécurité (7) rigide mince et allongé inséré, avec possibilité de déplacement axial, dans la collerette (5) de la tige parallèlement à l'axe de cette dernière et présentant une extrémité de poinçonnage ou d'entaillage (7b) capable, lors d'une surcourse accidentelle de la tige et suite à un déplacement axial dans une position déterminée dudit élément, d'agir fonctionnellement, en position sortie de la tige, sur ledit joint (6) pour le déformer et/ou l'endommager de sorte à supprimer sa fonction d'étanchéité.

## Description

La présente invention concerne le domaine des ressorts utilisant un fluide compressible et notamment de tels ressorts destinés à être utilisés dans des presses d'emboutissage et a pour objet un dispositif de ressort à gaz sécurisé.

On connaît déjà dans l'industrie des ressorts à gaz se présentant sous la forme de vérins autonomes contenant un gaz sous pression tel que de l'azote et qui sont plus particulièrement utilisés pour des travaux répétitifs d'emboutissage.

Un tel ressort à gaz est généralement constitué d'un corps de cylindre renfermant une chambre de compression remplie d'un gaz sous pression dans laquelle se déplace de manière linéaire une tige guidée en coulissement au moyen d'une bague de guidage fermant avec une étanchéité l'extrémité dudit corps de cylindre traversée par ladite tige, ladite extrémité correspondant à l'entrée du corps de cylindre. En outre, la tige est généralement terminée par une collerette faisant office de butée contre l'une des extrémités de la bague de guidage pour limiter les mouvements de rappel de la tige en position sortie.

En fonctionnement, en phase de rentrée de la tige dans le corps de cylindre, le volume intérieur de la chambre de compression occupé par le gaz sous pression diminue et la pression du gaz augmente, ce qui engendre une augmentation de la poussée sur la tige.

Dans une utilisation du ressort à gaz dans une presse d'emboutissage, la tige est déplacée depuis sa position sortie vers sa position rentrée en étant poussée par une presse ou un élément mécanique actionné par la presse, puis est déplacée vers sa position sortie initiale sous l'effet de la pression du gaz, généralement de l'azote appliquée sur la section de la tige. La pression du gaz, tel que l'azote, est généralement très élevée, de l'ordre de 15 Mpa. La collerette de la tige vient en butée contre l'extrémité inférieure (la plus proche du fond) de la bague de guidage.

D'autre part, un tel ressort à gaz comprend des joints d'étanchéité pour assurer son étanchéité, notamment au niveau de la bague de guidage, et éviter que le gaz ne s'échappe vers l'extérieur de la chambre de compression du corps de cylindre et donc à l'extérieur du ressort lui-même. Un tel ressort à gaz comprend généralement au moins deux types de joints d'étanchéité, à savoir au moins un joint statique interposé entre la pièce de guidage et la paroi interne de la chambre du vérin et au moins un joint dynamique interposé entre la tige et la pièce de guidage. Le joint statique est interposé en étant en contact avec la paroi externe de la pièce de guidage et la paroi interne du corps de cylindre. Le joint dynamique est interposé en étant en contact avec la paroi externe de la tige et la paroi interne de la pièce de guidage. Ce dernier est nommé joint dynamique car la tige vient frotter sur ce joint. Il y a donc un mouvement relatif entre le joint dynamique et la tige.

Toutefois, en cas de surcourse accidentelle de la tige, dans sa phase de rentrée, c'est à dire en cas de course de la tige allant au-delà d'une garde de quelques millimètres par rapport à une course nominale à 100%, par exemple dans une utilisation dans une presse d'emboutissage lorsque la presse exécute une course supérieure à la course prévue, il arrive que la collerette de la tige vienne heurter ou percuter le fond de la chambre de compression et se brise ou casse, ce qui a pour effet que la collerette n'assure plus sa fonction de retenue de la tige contre la bague de guidage et que la tige, sous la poussée du gaz, est alors projetée violemment hors du ressort. La tige ainsi éjectée présente un danger important pour l'utilisateur qui peut subir des dommages corporels plus ou moins graves. L'éjection de la tige peut également créer des dommages matériels environnant plus ou moins importants.

Pour remédier à cet inconvénient, il a été proposé plusieurs solutions.

L'une d'entre elles est divulguée, selon plusieurs formes de réalisation dans le document EP 0959263 qui a pour objet un dispositif à fluide compressible tel qu'un ressort à gaz comportant, d'une part, une chambre de compression et un piston (collerette), mobile dans cette chambre et, d'autre part, un organe de sécurité disposé de manière à être percuté par le piston en cas de surcourse accidentelle, c'est-à-dire de course de ce dernier supérieure d'une valeur prédéterminée à sa course nominale. L'organe de sécurité est agencé pour provoquer la purge de la chambre de compression lorsqu'il est percuté par le piston. Plus particulièrement, l'organe de sécurité forme saillie dans le fond de la chambre de compression, de préférence d'au moins 3 mm, et est solidaire d'un bouchon creux vissé dans le corps du ressort à gaz. L'organe de sécurité comporte un pion central et une portion annulaire amincie reliant ce pion au bouchon et dont la résistance mécanique de ladite portion amincie est choisie de telle sorte que cette dernière rompe lorsque le pion est percuté par le piston en cas de surcourse. Le pion est alors expulsé au travers du bouchon creux, ce qui a pour effet de vider la chambre de compression par un canal d'évacuation traversant le bouchon en communiquant avec l'extérieur et d'empêcher l'éjection accidentelle de la tige. En outre, le dévissage du bouchon permet de purger la chambre de compression.

Cependant, avec une telle solution, le bouchon est brisé ce qui nécessite de le remplacer par un autre bouchon. Un autre inconvénient est que le bouchon doit être agencé et fixé précisément dans le fond de la chambre pour être cassé efficacement lors d'une surcourse accidentelle supérieure d'une valeur prédéterminée à sa course nominale, autrement le système peut ne pas fonctionner. De plus ce dispositif comporte un joint d'étanchéité supplémentaire qui constitue également un risque de fuite.

Pour remédier à ces inconvénients le document EP 2 634 451 a pour objet un élément de contrôle constitué par un axe formant un poinçon s'étendant parallèlement à l'axe du vérin et étant disposé entre la bague de guidage et le corps du vérin de sorte à dépasser à l'extérieur du ressort à gaz du côté de l'entrée du corps de cylindre. Un tel poinçon est prévu pour être enfoncé au niveau de son extrémité au moyen du coulisseau d'une presse, lors d'une surcourse accidentelle, pour venir atteindre et endommager un joint d'étanchéité statique avec pour effet de créer une fuite de gaz vers l'extérieur rendant inefficace l'étanchéité du ressort à gaz et inopérant ce dernier. Dans une forme de réalisation différente, l'élément de contrôle consiste en un bouchon situé sur la partie supérieure du ressort à gaz, c'est-à-dire du côté de son entrée opposé à son fond, en s'étendant vers l'extérieur parallèlement à l'axe du ressort à gaz, ledit bouchon fermant un orifice créé entre la chambre de compression et l'extérieur de sorte que lors d'une surcourse accidentelle, le coulisseau de la presse vienne briser ce bouchon avec pour effet de provoquer une fuite du gaz à travers ce dernier qui comporte un canal d'évacuation du gaz communiquant avec l'extérieur. Une autre forme de l'élément de contrôle divulguée dans ce document consiste en une bague réalisée en deux parties qui coulissent l'une dans l'autre, un joint statique étant interposé entre ces deux bagues de sorte que lors d'une surcourse accidentelle il se produise un déplacement relatif des deux bagues ayant pour effet de supprimer l'étanchéité du joint statique et de provoquer une fuite du gaz empêchant l'éjection de la tige, c'est à dire maintenant cette dernière dans le ressort à gaz.

Toutefois, la solution proposée par le document EP 2 634 451, est complexe, couteuse et peu efficace. En effet, par exemple, l'écrasement du bouchon ne garanti pas la cassure de celui-ci et le fait de rajouter un joint statique entre les deux bagues accroit notablement le coût de fabrication du ressort à gaz. En outre, dans certaines circonstances, lorsque la presse vient frapper uniquement la tige, ce système est totalement inefficace. En effet, dans certaines presses, la pièce d'appui (coulisseau) présente un diamètre sensiblement identique à celui de la tige de sorte que, en cas de surcourse, la tige, en contact avec la pièce d'appui, va effectuer une surcourse, mais cette dernière, du fait de son diamètre, n'entrera pas en contact avec, et n'appuiera pas sur, le poinçon prévu pour endommager et/ou déformer le joint statique. Dans ce cas, le système ne fonctionnera pas et le ressort ne sera pas purgé et sécurisé.

La présente invention a pour but de pallier ces inconvénients en proposant un dispositif de ressort à gaz sécurisé, simple et peu coûteux ne nécessitant pas de système d'étanchéité supplémentaire et fonctionnant quelles que soient les dimensions de la tige d'appui de la presse agissant sur la tige.

A cet effet, la présente invention a pour objet un dispositif de ressort à gaz sécurisé comprenant un corps de cylindre renfermant, d'une part, une chambre de compression remplie d'un gaz sous pression et comportant un fond, une bague de guidage, une tige guidée axialement dans ladite bague de guidage entre une position rentrée et une position sortie et se terminant par une collerette faisant office de butée contre l'une des extrémités la bague de guidage pour limiter les mouvements de rappel de ladite tige en position sortie, un joint d'étanchéité dynamique interposé entre la bague de guidage et la tige, ladite collerette comprenant deux faces externes opposées, à savoir une première face externe en vis-à-vis du fond et une seconde face externe tournée vers la bague de guidage, se caractérisant essentiellement en ce que la collerette comprend au moins un perçage la traversant par les deux faces externes opposées parallèlement à l'axe de la tige, en ce qu'il comprend en outre au moins un élément de sécurité rigide mince et allongé inséré dans le perçage en s'étendant longitudinalement le long d'un axe parallèle à l'axe de la tige et situé dans l'axe du joint dynamique, ledit élément de sécurité comportant deux extrémités opposées, à savoir une extrémité, dite extrémité de butée, située du côté du fond et une extrémité, dite extrémité de poinçonnage ou d'entaillage, située du côté du joint dynamique, et en ce que ledit élément de sécurité est adapté pour être inséré dans le perçage de sorte à pouvoir, d'une part, être maintenu axialement dans ce dernier dans une première position axiale, dite position axiale de butée, dans laquelle son extrémité de butée dépasse de ce dernier et son extrémité de poinçonnage ou d'entaillage ne peut pas agir fonctionnellement sur le joint d'étanchéité dynamique et, d'autre part, être déplacé ou poussé axialement dans ledit perçage vers le joint d'étanchéité dynamique jusqu'à une seconde position axiale, dite position axiale de poinçonnage ou d'entaillage, dans laquelle l'extrémité de poinçonnage ou d'entaillage est capable d'agir fonctionnellement, dans la position sortie de la tige, sur le joint dynamique pour l'endommager en le déformant, le perforant, le coupant ou l'entaillant de sorte à supprimer sa fonction d'étanchéité, la seconde position axiale étant atteinte sous l'effet de la force de réaction due à la butée de l'extrémité de butée contre le fond lors d'une surcourse accidentelle de la tige dans sa position rentrée.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

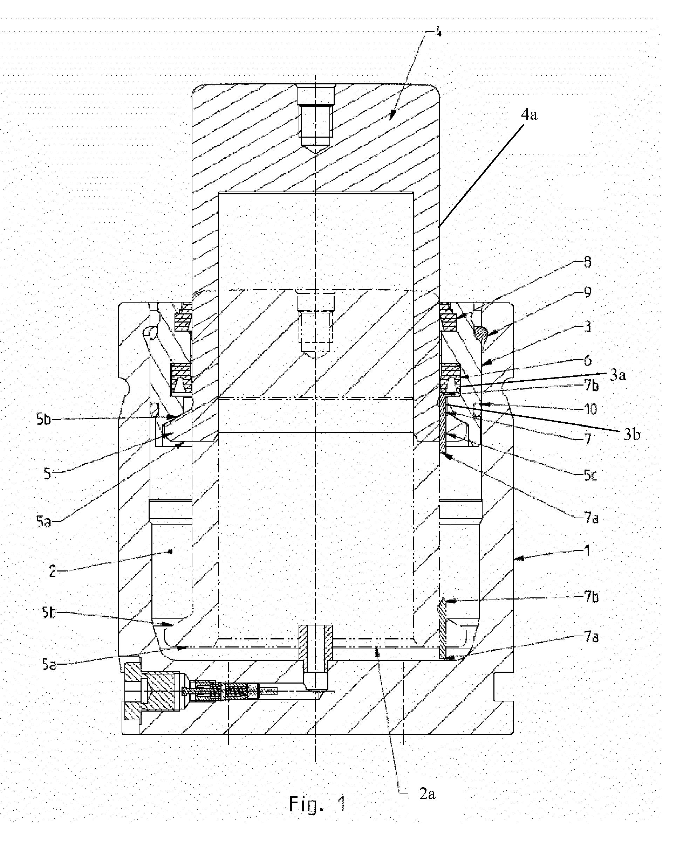

- la figure 1 montre une vue en coupe longitudinale d'un dispositif de ressort à gaz sécurisé, dans une orientation de fonctionnement verticale, à l'état de sortie de la tige et de butée de sa collerette contre l'extrémité inférieure de la bague de guidage, dans la première position axiale de l'élément de sécurité ne pouvant pas agir fonctionnellement sur le joint d'étanchéité dynamique,

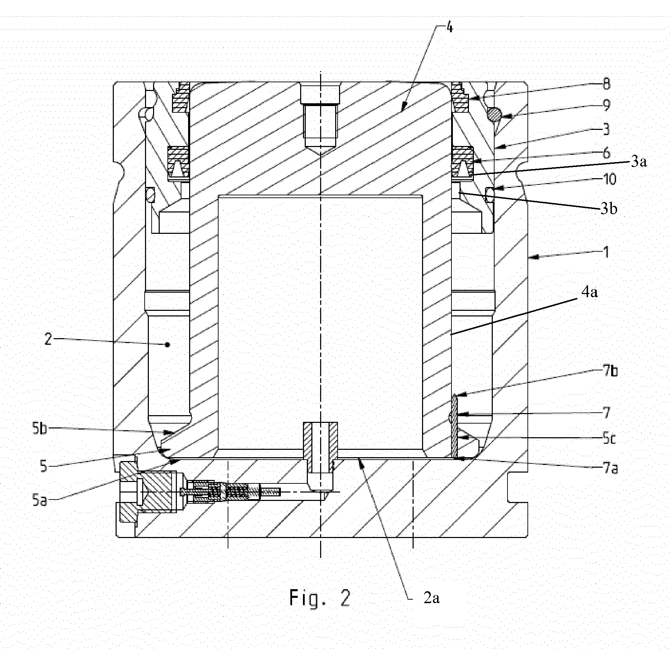

- la figure 2 montre une position de la tige du dispositif représenté sur la figure 1, à l'état rentrée de la tige et de surcourse accidentelle de cette dernière, avec la première face externe de la collerette en butée contre le fond de la chambre de compression et avec l'élément de sécurité déplacé en conséquence dans la deuxième position axiale lui permettant d'agir fonctionnellement, en position sortie de la tige, sur le joint d'étanchéité dynamique,

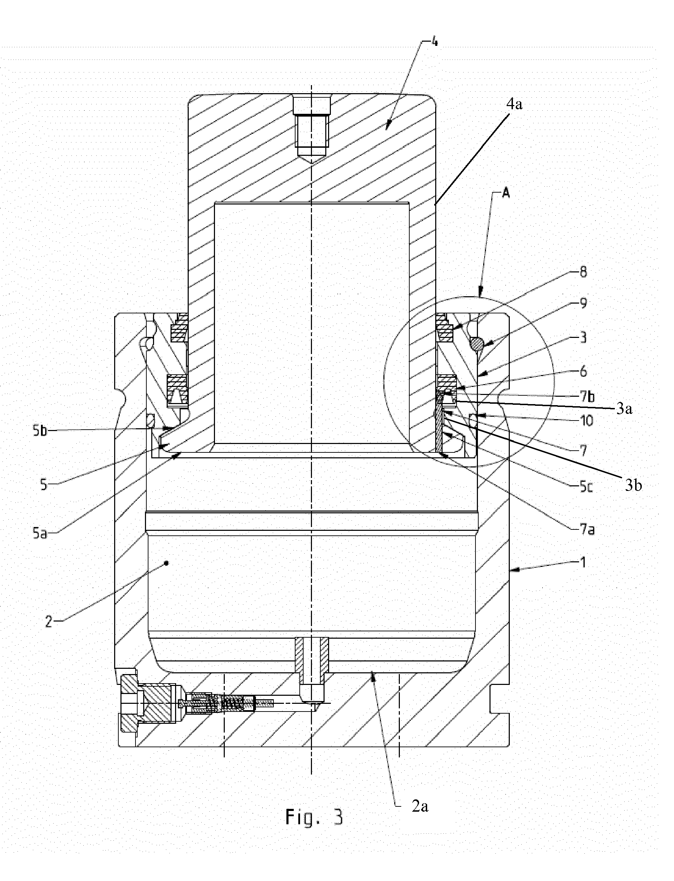

- la figure 3 montre une position de la tige du dispositif représenté sur la figure 1, à l'état de sortie de la tige et de butée de sa collerette, par sa seconde face externe, contre la bague de guidage, dans une phase faisant immédiatement suite à la rentrée de la tige avec une surcourse accidentelle telle que représentée sur la figure 2,

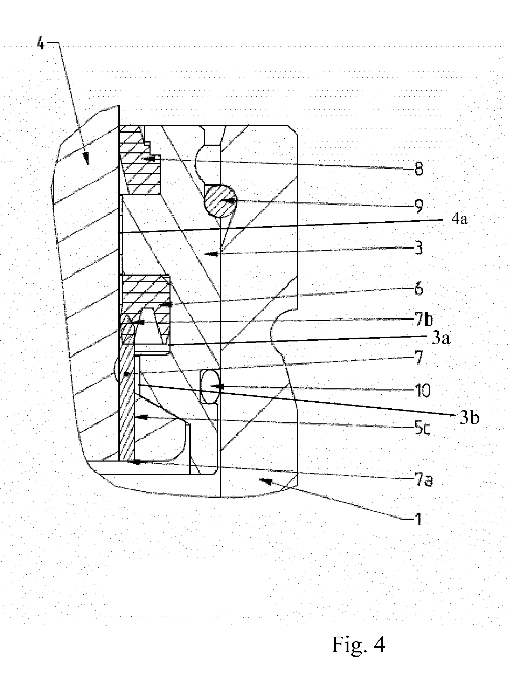

- la figure 4 montre une vue de détail la partie du dispositif représenté en A sur la figure 3 au niveau de la bague de guidage et du joint d'étanchéité dynamique déformé par l'élément de sécurité agissant fonctionnellement sur ce dernier.

Les figures montrent un dispositif de ressort à gaz sécurisé comprenant un corps de cylindre 1 renfermant, d'une part, une chambre de compression 2 remplie d'un gaz sous pression, non représenté, et comportant un fond 2a, une bague de guidage 3, une tige 4 guidée axialement dans cette dernière entre une position rentrée et une position sortie de la tige 4 et se terminant par une collerette 5 faisant office de butée contre la bague de guidage pour limiter les mouvements de rappel de ladite tige en position sortie, un joint d'étanchéité dynamique 6 interposé entre la bague de guidage 3 et la tige 4 qui comprend une paroi latérale externe 4a, ladite collerette 5 comprenant deux faces externes opposées, à savoir une première face externe 5a en vis-à-vis du fond 2a et une seconde face 5b externe tournée vers la bague de guidage 3.

Conformément à la présente invention, la collerette 5 comprend au moins un perçage 5c, c'est-à-dire au moins un trou, la traversant par les deux faces externes opposées 5a, 5b parallèlement à l'axe de la tige 4, c'est-à-dire traversant la collerette 5 de part en part sensiblement parallèlement à l'axe de la tige 4.

Toujours conformément à la présente invention, un tel dispositif comprend en outre au moins un élément de sécurité 7 rigide mince et allongé inséré dans le perçage 5c en s'étendant longitudinalement le long d'un axe parallèle à l'axe de la tige 4 et situé dans l'axe du joint dynamique 6, ledit élément de sécurité 7 comportant deux extrémités opposées 7a, 7b, à savoir une extrémité, dite extrémité de butée 7a, située du côté du fond 2a et une extrémité, dite extrémité de poinçonnage ou d'entaillage 7b, située du côté du joint dynamique 6.

Toujours conformément à la présente invention, l'élément de sécurité 7 est adapté pour être inséré dans le perçage 5c de sorte à pouvoir, d'une part, être maintenu axialement dans ce dernier dans une première position axiale, dite position axiale de butée, dans laquelle son extrémité de butée 7a dépasse de ce dernier et son extrémité de poinçonnage ou d'entaillage 7b ne peut pas agir fonctionnellement sur le joint d'étanchéité dynamique 6 (figure 1) et, d'autre part être déplacé ou poussé axialement dans ledit perçage vers le joint d'étanchéité dynamique 6 depuis ladite première position axiale jusqu'à une seconde position axiale, dite position axiale de poinçonnage ou d'entaillage, dans laquelle l'extrémité de poinçonnage ou d'entaillage 7b est capable d'agir fonctionnellement, dans la position sortie de la tige 4, sur le joint dynamique 6 pour l'endommager en le déformant, le perforant, le coupant ou l'entaillant de sorte à supprimer sa fonction d'étanchéité (figures 3 et figures 4). La seconde position axiale est atteinte sous l'effet de la force de réaction due à la butée de l'extrémité de butée 7a, dépassant de la collerette 5, contre le fond 2a lors d'une surcourse accidentelle de la tige 4 dans sa position rentrée (figure 2).

On comprendra que la suppression de la fonction d'étanchéité du joint d'étanchéité dynamique 6 en endommageant ce dernier va entraîner une fuite de gaz et une baisse rapide de la pression du gaz contenu dans la chambre de compression 2 empêchant, du fait d'une pression insuffisante du gaz, l'éjection de la tige 4 hors du corps de cylindre 1 ou maintenant cette dernière dans le corps de cylindre 1 et mettant le dispositif de ressort à gaz hors de fonction. A ce stade le dispositif de ressort à gaz est sécurisé et ne présente alors plus aucun risque pour l'utilisateur.

Si on se réfère à la figure 2, on peut voir que le dispositif de ressort à gaz se trouve dans une configuration avec une surcourse accidentelle de la tige 4 qui est en contact, plus particulièrement par la première face externe 5a de sa collerette 5, avec le fond 2a de la chambre de compression 2, c'est-à-dire que le dispositif de ressort à gaz est en situation de défaut. On rappellera que, selon les préconisations en matière de sécurité dans ce domaine, un ressort à gaz ne doit jamais être utilisé à 100% de la course nominale de sa tige 4, mais qu'il faut toujours conserver une garde de quelques millimètres. Toutefois, dans le cas où la course minimale préconisée est dépassée (surcourse accidentelle et situation de défaut du ressort à gaz), la tige 4 vient alors percuter le fond 2a de la chambre de compression 2 et l'élément de sécurité 7 du dispositif selon la présente invention vient par son extrémité de butée 7a dépassant du perçage 5c également en butée contre le fond 2.

L'élément de sécurité 7 peut être prévu pour être maintenu dans la position axiale de butée par ajustement serré, vissage, collage, soudage ou autre moyen permettant de le maintenir dans cette position. On comprendra que la position axiale de butée est réalisée et maintenue durant les déplacements de la tige 4 dans un fonctionnement normal du dispositif de ressort à gaz, c'est-à-dire tant que le ressort à gaz n'est pas en situation de défaut. Dans le cas où le ressort à gaz est en situation de défaut, l'élément de sécurité 7, qui vient comme vu précédemment en butée contre le fond 2a, est poussé ou déplacé axialement en force dans le perçage 5 vers l'entrée du corps de cylindre 1 c'est-à-dire, par exemple dans une utilisation verticale du ressort à gaz telle que représentée sur les figures annexées, vers le haut. Un tel effet de poussée ou de déplacement en force sur l'élément de sécurité 7 est du à la force de réaction générée par la butée de l'extrémité de butée 7a de l'élément de sécurité 7 contre le fond 2a de la chambre de compression en situation de défaut du ressort à gaz, c'est à dire en position rentrée de la tige 4 et de surcourse accidentelle.

Dans une forme de réalisation préférentielle, l'élément de sécurité 7 peut comporter préférentiellement une extrémité pointue ou coupante formant l'extrémité de poinçonnage ou d'entaillage 7b et une extrémité sensiblement plate, incurvée ou arrondie formant l'extrémité de butée 7a (figures 1, 2, 3).

Les figures 1, 2, 3 et 4 montrent également que le joint d'étanchéité dynamique 6 peut présenter une forme annulaire, de préférence de section globalement carrée ou rectangulaire, mais qui peut aussi être de section ronde. En outre, le joint d'étanchéité dynamique 6, notamment lorsqu'il présente une section globalement carrée ou rectangulaire, peut comporter une rainure annulaire 6a pratiquée dans l'une de ses faces tournée, à l'état monté du joint d'étanchéité dynamique 6, vers l'élément de sécurité 7, de sorte à faciliter la déformation et/ou l'endommagement du joint d'étanchéité dynamique 6 par l'élément de sécurité 7 et, partant, le passage du gaz sous pression entre la tige 4 et le joint d'étanchéité dynamique 6 vers l'extérieur (figures 3 et 4).

On peut voir également sur les figures 1, 2, 3 et 4 que la bague de guidage 3 peut présenter une paroi interne de diamètre sensiblement égale au diamètre externe de la tige 4 et ladite paroi interne peut comporter un logement 3a adapté pour recevoir le joint d'étanchéité dynamique 6 venant à l'état monté dans le logement 3a, dont il dépasse en partie, en appui et/ou compression d'étanchéité contre la paroi externe de la tige 4. Le logement 3a peut être de préférence annulaire pour recevoir le cas échéant le joint d'étanchéité dynamique 6 annulaire.

En outre, pour permettre, lors d'une surcourse accidentelle et dans la position sortie de la tige 4, le passage de l'élément de sécurité 7, et plus particulièrement son extrémité de poinçonnage ou d'entaillage 7b, dans la bague de guidage 3 jusqu'au joint d'étanchéité dynamique 6 (figures 3 et 4), la bague de guidage 3 peut comporter un évidement 3b pratiqué dans sa paroi interne entre le logement 3a du joint d'étanchéité dynamique 6 et l'extrémité (inférieure dans une orientation verticale) de la bague de guidage 3 contre laquelle vient en butée la collerette 5 en position sortie de la tige 4 (figures 1, 2, 3, 4).

Dans une forme de réalisation préférentielle, l'évidement 3b peut consister en un rétrécissement de la paroi interne de la bague de guidage 3, c'est-à-dire une partie de la paroi interne de plus grand diamètre que celui de la paroi externe de la tige 4, afin de former un interstice entre ces dernières permettant le passage de l'élément de sécurité 7 dans la bague de guidage 3 jusqu'au joint d'étanchéité dynamique 6 pour agir fonctionnellement sur ce dernier (figures 1, 2, 3, 4).

Comme on peut le voir sur les figures 1, 2, 3 et 4, la tige 4 peut comprendre une paroi latérale externe 4a, qui peut être de préférence une paroi latérale externe cylindrique, et, de préférence, le perçage 5c peut être prévu, c'est-à-dire peut être pratiqué dans la collerette 5, de manière que l'élément de sécurité 7 puisse s'étendre longitudinalement à proximité de la paroi latérale externe de la tige 4 ou contre ladite paroi latérale externe.

Plus particulièrement, on peut voir sur la figure 4 que l'élément de sécurité 7 peut être prévu pour venir endommager le joint d'étanchéité dynamique 6, par exemple, en l'entaillant, en le coupant, en le perforant ou en le déformant, ce qui a pour effet de laisser passer le gaz sous pression qui s'échappera ensuite, par le chemin F, vers l'extérieur du corps de cylindre 1 par son entrée. On peut voir que ce chemin F de la fuite de gaz peut passer par un joint racleur 8 qui peut être situé au niveau de l'entrée du corps de cylindre 1. Un tel joint n'a pas de fonction d'étanchéité mais fait office de racleur pour retenir les impuretés présentes sur la tige 4 à l'extérieur du corps de cylindre 1.

On peut voir également sur les figures 1, 2 , 3 et 4 que le dispositif peut comprendre en outre au moins un joint d'étanchéité statique, par exemple deux joints d'étanchéité statiques 9, 10, interposé(s) entre la bague de guidage 3 et la paroi interne du corps de cylindre 1.

Dans une forme de réalisation préférentielle du montage de l'élément de sécurité 7 dans la collerette 5, l'élément de sécurité 7 peut être serti ou emmanché de force dans le perçage 5 de sorte à permettre son maintien dans la première position axiale de butée et son déplacement axial dans la deuxième position axial de poinçonnage.

On notera que le dispositif selon l'invention peut comprendre plusieurs perçages 5c traversant de part en part la collerette 5 et plusieurs éléments de sécurité 7, chaque élément de sécurité 7 étant inséré respectivement dans l'un des perçages 5c, ce sans sortir du cadre de la présente invention.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de ressort à gaz sécurisé comprenant un corps de cylindre (1) renfermant, d'une part, une chambre de compression (2) remplie d'un gaz (2a) sous pression et comportant un fond (2a), une bague de guidage (3), une tige (4) guidée axialement dans ladite bague de guidage entre une position rentrée et une position sortie et se terminant par une collerette (5) faisant office de butée contre l'une des extrémités de la bague de guidage (3) pour limiter les mouvements de rappel de ladite tige en position de sortie, un joint d'étanchéité dynamique (6) interposé entre la bague de guidage (3) et la tige (4), ladite collerette (5) comprenant deux faces externes opposées, à savoir une première face externe (5a) en vis-à-vis du fond (2a) et une seconde face (5b) externe tournée vers la bague de guidage (4),
dispositif **caractérisé en ce que** la collerette (5) comprend au moins un perçage (5c) la traversant par les deux faces externes opposées (5a, 5b) parallèlement à l'axe de la tige (4), **en ce qu'**il comprend en outre au moins un élément de sécurité (7) rigide mince et allongé inséré dans le perçage (5c) en s'étendant longitudinalement le long d'un axe parallèle à l'axe de la tige (4) et situé dans l'axe du joint dynamique (6), ledit élément de sécurité (7) comportant deux extrémités opposées (7a, 7b), à savoir une extrémité, dite extrémité de butée (7a), située du côté du fond (2a) et une extrémité, dite extrémité de poinçonnage ou d'entaillage (7b), située du côté du joint dynamique (6), et **en ce que** ledit élément de sécurité est adapté pour être inséré dans le perçage (5c) de sorte à pouvoir, d'une part, être maintenu axialement dans ce dernier dans une première position axiale, dite position axiale de butée, dans laquelle son extrémité de butée (7a) dépasse de ce dernier et son extrémité de poinçonnage ou d'entaillage (7b) ne peut pas agir fonctionnellement sur le joint d'étanchéité dynamique (6) et, d'autre part, être déplacé ou poussé axialement dans ledit perçage vers le joint d'étanchéité dynamique (6) jusqu'à une seconde position axiale, dite position axiale de poinçonnage ou d'entaillage, dans laquelle l'extrémité de poinçonnage ou d'entaillage (7b) est capable d'agir fonctionnellement sur le joint dynamique (6) pour l'endommager en le déformant, le perforant, le coupant ou l'entaillant de sorte à supprimer sa fonction d'étanchéité et à provoquer une fuite de gaz hors dudit ressort, la seconde position axiale étant atteinte sous l'effet de la force de réaction due à la butée de l'extrémité de butée (7a) contre le fond (2a) lors d'une surcourse accidentelle de la tige (4) dans sa position rentrée.

2. Dispositif, selon la revendication 1, **caractérisé en ce que** l'élément de sécurité (7) comporte une extrémité pointue ou coupante formant l'extrémité de poinçonnage ou d'entaillage (7b) et une extrémité sensiblement plate, incurvée ou arrondie formant l'extrémité de butée (7b).

3. Dispositif, selon l'une quelconque des revendications 1 à 2, **caractérisé en ce que** la tige (4) comprend une paroi latérale externe (4a), de préférence une paroi externe cylindrique, et **en ce que** le perçage (5c) est prévu de sorte que l'élément de sécurité (7) s'étende longitudinalement à proximité de la paroi latérale externe (4a) de la tige (4a) ou contre ladite la paroi latérale externe.

4. Dispositif, selon l'une quelconque des revendications 1 à 3, **caractérisé en ce que** l'élément de sécurité (7) est serti ou emmanché de force dans le perçage (5) de sorte à permettre son maintien dans la première position axiale de butée et son déplacement dans la deuxième position axiale de poinçonnage ou d'entaillage.

5. Dispositif, selon l'une quelconque des revendications 1 à 4, **caractérisé en ce que** le joint d'étanchéité dynamique (6) présente une forme annulaire de section globalement carrée ou rectangulaire et comporte une rainure annulaire (6a) pratiquée dans l'une de ses faces tournée, à l'état monté du joint d'étanchéité dynamique (6), vers l'élément de sécurité (7), de sorte à faciliter la déformation et/ou l'endommagement du joint d'étanchéité dynamique (6) par l'élément de sécurité (7).

6. Dispositif, selon l'une quelconque des revendications précédentes, **caractérisé en ce que** la bague de guidage (3) présente une paroi interne de diamètre sensiblement égale au diamètre externe de la tige (4), **en ce que** ladite paroi interne comporte un logement (3a) adapté pour recevoir le joint d'étanchéité dynamique (6) venant à l'état monté dans le logement (3a), dont il dépasse en partie, en appui et/ou en compression d'étanchéité contre la paroi latérale externe (4a) de la tige (4) définie dans la revendication 3 et **en ce que**, pour permettre le passage de l'élément de sécurité (7), et plus particulièrement le passage de son extrémité de poinçonnage ou d'entaillage (7b), dans la bague de guidage (3) jusqu'au joint d'étanchéité dynamique (6), la bague de guidage (3) comporte un évidement (3b) pratiqué dans sa paroi interne entre le logement (3a) du joint d'étanchéité dynamique (6) et l'extrémité de la bague de guidage (3) contre laquelle vient en butée la collerette (5) en position sortie de la tige (4).

7. Dispositif, selon la revendication 6, **caractérisé en ce que** l'évidement (3b) consiste en un rétrécissement de la paroi interne de la bague de guidage (3), c'est-à-dire une partie de la paroi interne de plus grand diamètre que celui de la paroi latérale externe (4a) de la tige (4), afin de former un interstice entre ces dernières permettant le passage de l'élément de sécurité (7) dans la bague de guidage (3) jusqu'au joint d'étanchéité dynamique (6) pour agir fonctionnellement sur ce dernier.
